# EUROPÄISCHE PATENTSCHRIFT

(11) **EP 3 583 352 B1**
(45) Veröffentlichungstag und Bekanntmachung des Hinweises auf die Patenterteilung: **27.12.2023**
(21) Anmeldenummer: 18706682.4
(22) Anmeldetag: 13.02.2018
(51) Int. Cl.: F21V 13/02, F21V 8/00, F21K 9/61, F21Y 115/10

(54) **LEUCHTE SOWIE VERFAHREN ZUR STEUERUNG DER ABSTRAHLCHARAKTERISTIK DERSELBEN**
LIGHTING UNIT AND METHOD FOR CONTROLLING EMISSION CHARACTERISTICS THEREOF
LAMPE ET PROCÉDÉ POUR EN COMMANDER LA CARACTÉRISTIQUE DE RAYONNEMENT

(30) Priorität: 14.02.2017 DE 102017202277; 03.08.2017 DE 102017213462; 03.08.2017 DE 102017213466; 03.08.2017 DE 102017213488; 18.08.2017 DE 102017214395; 20.12.2017 DE 202017107771 U
(43) Veröffentlichungstag der Anmeldung: 25.12.2019
(60) Teilanmeldung: 19203183.9
(73) Patentinhaber: Zumtobel Lighting GmbH, 6850 Dornbirn (AT)
(72) Erfinder: EBNER, Stephan, 89155 Erbach (DE); GASSNER, Patrik, 6722St. Gerold (AT); WIMMER, Rebecca, 6932 Langen Bei Bregenz (AT)
(74) Vertreter: Kiwit, Benedikt
(86) Internationale Anmeldenummer: PCT/EP2018/053478
(87) Internationale Veröffentlichungsnummer: WO 2018/149796

(56) Entgegenhaltungen:
- EP-A1- 0 535 401
- EP-A2- 1 672 755
- EP-A2- 2 177 816
- WO-A1-2012/004760
- US-A1- 2013 058 123
- US-A1- 2013 163 273
- US-A1- 2015 003 061
- US-A1- 2015 362 144
- US-A1- 2016 154 193

## Beschreibung

Die vorliegende Erfindung betrifft eine Leuchte sowie ein Verfahren zur Steuerung der Abstrahlcharakteristik dieser Leuchte.

Aus dem Stand der Technik sind zahlreiche Leuchten bekannt, welche ausgelegt sind, um die Abstrahlcharakteristik derselben beeinflussen zu können. Hierzu sind unterschiedliche Ansätze bekannt. Beispielsweise ist es denkbar, einem Leuchtmittel bspw. in dessen Abstrahlrichtung gesehen bzw. in dessen Strahlengang gelegen wenigstens eine oder mehrere Licht-beeinflussende Optiken - wie Linsen oder Reflektoren - anzuordnen, welche das Licht der Leuchtmittel zur definierten Lichtabgabe optisch beeinflussen. Beispielsweise durch Relativbewegung zwischen Leuchtmittel und Linse(n) kann die Abstrahlcharakteristik (z.B. zur Erzielung eines Zoomeffektes) beeinflusst und variiert werden. Nachteilig an dieser Art von Optik ist zum einen, dass die hierfür geeigneten Optiken häufig nur eine unzureichende Farbmischung des eingekoppelten Lichts erlauben, sodass die einzelnen Leuchtmittel (LEDs bzw. Arrays) teils erkennbar abgebildet werden. Zum anderen muss zur Steuerung des Zooms eine vergleichsweise aufwendige und in jedem Fall eine mechanische angesteuerte Vorrichtung bereitgestellt werden.

US 2015/003061 A1 zeigt ein lineares Beleuchtungssystem aufweisend eine Vielzahl von LED-Anordnungen und damit jeweils korrespondierende hintereinander geschaltete Elemente, die der gezielten Lichtleitung und Lichtrichtung dienen. Das von den einzelnen LED Anordnungen emittierte Licht wird jeweils in einen Kegel emittiert und dort durchmischt. Der Kegel leitet das Licht durch zumindest einen Diffusor in eine zylinderförmige Blende, die an deren Umfang lichtabsorbierendes Material aufweist, welches schräg zur Längsachse der Blende verlaufende Lichtstrahlen absorbiert. Das restliche Licht wird durch eine Linse und ein Außenfenster abgegeben.

US 2015/362144 A1 zeigt eine Lampeneinheit aufweisend eine Vielzahl von Lichtquellen, eine darüber je Lichtquelle angeordnete Lichtleiteinheit und eine Linse. Von den Lichtquellen emittiertes Licht wird in der zugeordneten Lichtleiteinheit gerichtet und schließlich über die Linse abgegeben. Die Lichtleiteinheit weist Lichtleiter zur Lichtrichtung auf. Zwischen der jeweiligen Lichtquelle und der zugeordneten Lichtleiteinheit kann ein Faserstäbchenbündel vorgesehen sein, das der Lichtleitung von den Lichtquellen zu den Lichtleitern dient und aus einer Vielzahl einzelner Lichtleitfasern besteht.

US 2013/058123 A1 zeigt einen einteiligen Lichtleiter, der einen Lichtstab und eine Linse aufweist.

US 2016/154193 A1 und EP 0535401 A1 zeigen Leuchte mit angesteuerten Lichtsegmenten.

Es ist somit eine Aufgabe der vorliegenden Erfindung, eine Leuchte bereitzustellen, welche eine einfache Anpassung der Abstrahlcharakteristik (bspw. Zoomeffekt) bei bevorzugt möglichst homogener Lichtabbildung ermöglicht.

Diese Aufgabe wird durch den Gegenstand der unabhängigen Ansprüche gelöst. Die abhängigen Ansprüche bilden den zentralen Gedanken der Erfindung in besonders vorteilhafterweise weiter.

Gemäß einem ersten Aspekt betrifft die vorliegende Erfindung eine Leuchte mit einer Lichtquelle, einer Voroptik sowie einer Auskoppeloptik. Die Lichtquelle ist dabei in einzeln ansteuerbare Lichtsegmente unterteilt. Die Voroptik weist eine erste Lichteinkoppelseite zum Einkoppeln des Lichtes jeder der Lichtsegmente der Lichtquelle sowie eine erste Lichtauskoppelseite zur definierten Lichtauskopplung auf. Die Auskoppeloptik ist der Voroptik nachgelagert; also der Voroptik in Hauptabstrahlrichtung der Leuchte gesehen nachgeschaltet. Die Auskoppeloptik weist eine zweite Lichteinkoppelseite zum Einkoppeln des (bzw. allen) aus der Voroptik ausgekoppelten Lichtes sowie eine zweite Lichtauskoppelseite zur definierten Lichtabgabe der Leuchte. Die Leuchte ist derart ausgebildet, dass eine den angesteuerten Lichtsegmenten entsprechende Lichtverteilung in einer der Auskoppeloptik nachgelagerten Beleuchtungsebene abgebildet wird.

Durch die Bereitstellung einzeln ansteuerbare Lichtsegmente kann es ermöglicht werden, durch wahlweises ansteuern dieser Lichtsegmente die Abstrahlcharakteristik der definierten Lichtabgabe zu steuern und somit zu variieren bzw. zu verändern. Die Abbildung der den angesteuerten Lichtsegmenten entsprechenden Lichtverteilung in eine der Auskoppeloptik nachgelagerten Beleuchtungsebene kann somit wahlweise in Abhängigkeit der angesteuerten Lichtsegmente variiert werden. Somit kann die Abstrahlcharakteristik und letztlich die Abbildung der Lichtabgabe variiert werden. Dabei ist auch denkbar, je nach angesteuerten Lichtsegmenten, einen (rein) elektrischen Zoomeffekt zu erzielen, wie im Weiteren noch beschrieben wird.

Die Lichtquelle kann beispielsweise eine LED-Matrix umfassen, welche eine Vielzahl einzeln ansteuerbarer LEDs aufweist. Diese wiederum bilden die einzeln ansteuerbaren Lichtsegmente. Eine solche Ausgestaltungsform ist bevorzugt dann denkbar, wenn die Auflösung der Matrixanordnung fein genug ist. Dies bietet sich insbesondere an, wenn eine einfarbige LED-Matrixanordnung in die Beleuchtungsebene abgebildet werden soll, sodass in Abhängigkeit der Ausgestaltung der Matrixanordnung sowie ferner der Ansteuerung der ansteuerbaren Lichtsegmente (hier LEDs) quasi jede beliebige Abstrahlcharakteristik generiert werden kann.

Die Lichtquelle weist einen länglichen Lichtmischstab mit einer dritten Lichteinkoppelseite und einer der dritten Lichteinkoppelseite bezüglich seiner länglichen Erstreckung gegenüberliegenden dritten Lichtauskoppelseite auf. Der Lichtmischstab ist dabei in mehrere Segmente unterteilt, welche die einzeln ansteuerbaren Lichtsegmente bilden und sich jeweils zwischen der dritten Lichteinkoppelseite und der dritten Lichtauskoppelseite erstrecken. Die Verwendung von Lichtmischstäben hat den Vorteil einer guten Durchmischung der Lichtfarben des in den Lichtmischstab bzw. seiner einzelnen Segmente eingekoppelten Lichtes. Die einzelnen Segmente bilden bevorzugt eine Vielzahl kleiner Lichtmischstäbe, welche in geeigneter und bevorzugt kompakter Anordnung den länglichen Lichtmischstab als Lichtquelle der erfindungsgemäßen Leuchte bilden. Dies hat den Vorteil, dass die Segmente (also die kleinen Lichtmischstäbe) unabhängig voneinander beliebig angesteuert werden können, und somit die Abstrahlcharakteristik der Leuchte wahlweise variiert werden kann.

Dabei können den Segmenten auf Seiten der dritten Lichteinkoppelseite des Lichtmischstabes jeweils eine oder eine Gruppe einzeln ansteuerbarer LEDs zugeordnet sein (beispielsweise als Teil der vorbezeichneten LED-Matrix). Die Gruppen an LEDs sind dabei bevorzugt gleichartig ausgebildet; sie weisen also bevorzugt die gleichen LEDs auf.

Um eine gute Lichtmischung in den Segmenten des Lichtmischstabes zu erzielen, weist der Lichtmischstab - also seine Segmente jeweils - bevorzugt eine Länge von wenigstens 30mm, ferner bevorzugt wenigstens 50mm und besonders bevorzugt wenigstens 80mm auf.

Die Segmente weisen ein zentrales Stabelement sowie das zentrale Stabelement umfangsseitig umgebende Ringelemente und/oder Ringsegmente auf. Die ringförmige Anordnung der Segmente des

Lichtmischstabes ermöglicht es, durch wahlweises Zuschalten der Segmente von innen nach außen einen rein elektrischen Zoom umzusetzen. Je nach Ausgestaltungsform ist es somit denkbar, dass wahlweise Ringe oder auch nur Ringsegmente wahlweise einzeln schaltbar sind, um eine entsprechende Abstrahlcharakteristik und bevorzugt einen Zoomeffekt zu erzielen. Auch können, je nach Ausgestaltung des Lichtmischstabes bzw. Ansteuerung der einzelnen Segmente bzw. LEDs oder auch der LED-Matrix, beliebige und wahlweise auch stark asymmetrische Lichtverteilungen generiert werden.

Gemäß einer bevorzugten Ausgestaltungsform ist wenigstens ein Teil der Segmente, vorzugsweise wenigstens das zentrale Stabelement, integral mit der Voroptik ausgebildet. Dies hat den Vorteil, dass einerseits weniger Bauteile erforderlich sind und zum anderen die Lichtführung von der Lichtquelle in die Voroptik einfach und sicher bereitgesellt ist.

Gemäß einer bevorzugten Ausgestaltungsform weisen die Segmente des Lichtmischstabes einen wenigstens teilweise eckigen Querschnitt auf. Bevorzugt weist dabei wenigstens das zentrale Stabelement im Wesentlichen einen sechseckigen Querschnitt auf. Auf diese Weise kann bei einfacher geometrischer Ausgestaltung und somit einfacher Herstellung der einzelnen Segmente eine besonders kompakte Bauform des Lichtmischstabes und somit insgesamt eine möglichst homogene Lichtabgabe der Leuchte unabhängig davon, welche der ansteuerbaren Lichtsegmente angesteuert sind, erzielt werden.

In einer bevorzugten Ausgestaltungsform ist es denkbar, dass der Lichtmischstab bzw. wenigstens ein Teil seiner Segmente, zu der Voroptik bzw. zu seiner dritten Lichtauskoppelseite hin in eine definierte Querschnittsform übergeht bzw. zuläuft. Besonders bevorzugt ist dabei eine runde Querschnittsform. Jedoch sind auch andere Querschnittsformen denkbar, je nachdem, welche Abstrahlcharakteristik gewünscht ist.

Die Lichtquelle - also bevorzugt die LED-Matrix oder der Lichtmischstab und insbesondere dessen dritte Lichtauskoppelseite - steht/stehen bevorzugt in Kontakt mit der ersten Lichteinkoppelseite der Voroptik. Bevorzugt ist hierbei insbesondere ein flächiger Kontakt. Auf diese Weise kann das Licht ausgehend von der Lichtquelle direkt und effektiv in die Voroptik eingekoppelt werden.

Bevorzugt kann die Voroptik eine sphärische Linse wie eine Halbkugellinse aufweisen. Dabei ist bevorzugt die erste Lichteinkoppelseite wenigstens teilweise flächig ausgebildet. Die erste Lichtauskoppelseite kann sphärisch, insbesondere halbkugelfömig, ausgebildet sein. Die Voroptik sorgt somit in besonders effektiver Weise dafür, dass das Licht, welches in die Voroptik von der Lichtquelle kommend eingekoppelt wird, definiert vorgebündelt wird, bevor es in die nachgelagerte Auskoppeloptik gelangt.

Die Auskoppeloptik kann bevorzugt eine sphärische Linse, eine asphärische Linse oder eine Fresnellinse sein. Die Ausgestaltung der Auskoppeloptik ist jedoch durch die vorliegende Erfindung nicht beschränkt und richtet sich nach der gewünschten Abstrahlcharakteristik. Insgesamt ist die Auskoppeloptik bevorzugt derart ausgebildet, dass sie das von der Voroptik kommende Licht (gänzlich) aufnimmt und zur definierten Lichtabgabe bereitstellt; insbesondere definiert ausgerichtet abgibt.

In einer bevorzugten Ausgestaltungsform kann die Auskoppeloptik eine flächige zweite Lichteinkoppelseite aufweisen, über die das Licht in effektiver Weise von der Voroptik kommend und bevorzugt vollumfänglich eingekoppelt werden kann.

Die Leuchte kann ferner eine Streustruktur aufweisen, welche bevorzugt zwischen der Voroptik und der Auskoppeloptik derart angeordnet ist, um das von der Voroptik ausgekoppelte Licht zu streuen, bevor das so gestreute Licht über die zweite Lichteinkoppelseite in die Auskoppeloptik eingekoppelt wird. Mittels einer entsprechend bereitgestellten Streustruktur soll, falls erforderlich, eine weitere Weichzeichnung der Abbildung der definierten Lichtabgabe bzw. Lichtverteilung ermöglicht werden.

Die Streustruktur kann als separate Streuscheibe zwischen der Voroptik und der Auskoppeloptik angeordnet sein. Dabei kann die Streuscheibe relativ fix zu oder auch direkt auf der Auskoppeloptik und insbesondere deren zweiter Lichteinkoppelseite vorgesehen sein. Somit kann eine definierte Weichzeichnung vorgegeben werden. Es ist jedoch alternativ oder ergänzend auch denkbar, die Streuscheibe bevorzugt in Lichtführungsrichtung (also insbesondere bevorzugt in Hauptabstrahlrichtung der Leuchte) zwischen der Voroptik und der Auskoppeloptik beweglich anzuordnen. Insbesondere ist die Streuscheibe hier relativ zur Auskoppeloptik beweglich angeordnet. Eine Bewegung kann dabei insbesondere bevorzugt mittels einer Manipulationseinheit erfolgen. Die Manipulationseinheit kann dabei eine mechanisch oder elektrisch einstellbare Einheit sein; beispielsweise ein Elektromotor. Mittels der beweglich vorgesehenen Streuscheibe soll es ermöglicht werden, die Schärfe der Lichtabbildung der Leuchte wahlweise einzustellen.

In einer besonders bevorzugten Ausgestaltungsform ist alternativ oder zusätzlich die Streustruktur direkt in der Auskoppeloptik und insbesondere auf der zweiten Lichteinkoppelseite als Oberflächenstruktur bereitgestellt. Auf diese Weise wird es neben der Streuung des Lichtes zur Weichzeichnung der Abbildung ermöglicht, beispielsweise auch Rückreflektionen in der Leuchte möglichst gering zu halten.

Gemäß einem zweiten Aspekt betrifft die vorliegende Erfindung ferner ein Verfahren zur Steuerung der Abstrahlcharakteristik einer Leuchte. Dieses Verfahren weist dabei die folgenden Schritte auf: In einem ersten Schritt wird eine Leuchte gemäß der vorliegenden Erfindung bereitgestellt. Bei dieser werden gemäß einem zweiten Schritt des Verfahrens die einzeln ansteuerbaren Lichtsegmente zur Abbildung einer den angesteuerten Lichtsegmenten entsprechenden Lichtverteilung in einer der Auskoppeloptik nachgelagerten Beleuchtungsebene wahlweise angesteuert. Indem somit die Lichtsegmente in beliebiger Weise angesteuert werden können, kann in einfacher Weise elektrisch die Abstrahlcharakteristik eingestellt werden und bei entsprechender Ansteuerung auch ein (rein) elektrischer Zoom realisiert werden.

Das Verfahren kann ferner einen Schritt des wahlweisen Bewegens der separaten Streuscheibe bevorzugt in Lichtführungsrichtung (beispielsweise entsprechend der Hauptabstrahlrichtung der Leuchte) zwischen der Voroptik und der Auskoppeloptik aufweisen. Insbesondere findet dabei die Bewegung relativ zur Auskoppeloptik statt. Die Bewegung kann dabei bevorzugt mittels der Manipulationseinheit erfolgen. Mittels der Bewegung wird dabei die Schärfe der Abbildung der Lichtverteilung auf der Beleuchtungsebene wahlweise und definiert eingestellt.

Weitere Ausgestaltungen und Vorteile der vorliegenden Erfindung werden anhand der begleitenden Figuren der folgenden Zeichnungen beschrieben. Es zeigen:
- Figur 1: eine seitliche Schnittansicht einer Leuchte gemäß einem ersten Ausführungsbeispiel der vorliegenden Erfindung,
- Figur 2: eine perspektivische Darstellung eines Lichtmischstabes der erfindungsgemäßen Leuchte gemäß Figur 1,
- Figur 3: eine perspektivische Detailansicht des Lichtmischstabes gemäß Figur 2,
- Figur 4: eine perspektivische Schnittansicht einer erfindungsgemäßen Leuchte gemäß einem zweiten Ausführungsbeispiel der vorliegenden Erfindung,
- Figur 5: perspektivische Ansichten unterschiedlicher Ausgestaltungsformen eines Lichtmischstabes sowie einer Voroptik einer erfindungsgemäßen Leuchte der vorliegenden Erfindung,
- Figur 6: unterschiedliche Abbildungen von den angesteuerten Lichtsegmenten entsprechenden Lichtverteilungen in einer Beleuchtungsebene,
- Figur 7: die Abbildungen gemäß Figur 6 bei Verwendung der gleichen erfindungsgemäßen Leuchte unter Verwendung einer zusätzlichen Streustruktur,
- Figur 8: seitliche Ansichten unterschiedlicher Ausführungsbeispiele einer Auskoppeloptik einer erfindungsgemäßen Leuchte der vorliegenden Erfindung,
- Figur 9: eine perspektivische Ansicht einer erfindungsgemäßen Leuchte gemäß einem dritten Ausführungsbeispiel der vorliegenden Erfindung,
- Figur 10: die Abbildung einer den angesteuerten Lichtsegmenten entsprechenden Lichtverteilung in einer Beleuchtungsebene gemäß der Leuchte aus Figur 9.

In den Figuren sind unterschiedliche Ausführungsbeispiele einer erfindungsgemäßen Leuchte 1 gezeigt. Gleiche Merkmale sind dabei mit gleichen Bezugszeichen versehen und die einzelnen Merkmale der unterschiedlichen Ausführungsbeispiele sind in beliebiger Weise mit und untereinander kombinierbar.

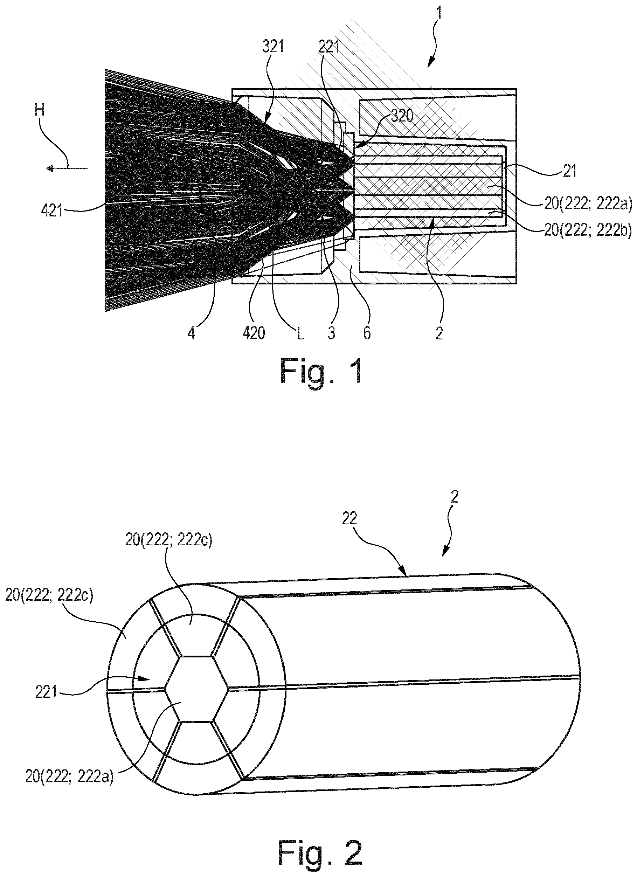

Insbesondere die Figuren 1, 4 und 9 zeigen drei Ausführungsbeispiele einer Leuchte 1 gemäß der vorliegenden Erfindung. Diese Leuchten 1 zeichnen sich alle dadurch aus, dass sie eine Lichtquelle 2, eine der Lichtquelle in Lichtführungsrichtung L nachgelagerte Voroptik 3 sowie eine der Voroptik in Lichtführungsrichtung L nachgelagerte Auskoppeloptik 4 aufweisen. Die Lichtführungsrichtung entspricht dabei der Hauptrichtung, die das Licht durch die Leuchte 1 nimmt; bevorzugt entspricht diese der Hauptabstrahlrichtung H der Leuchte 1.

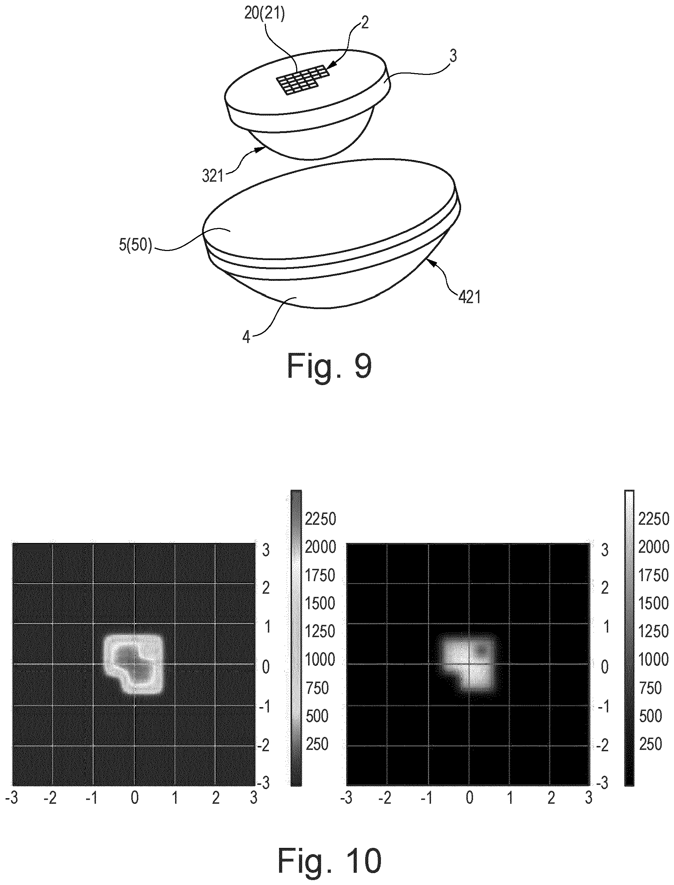

Die Lichtquelle 2 ist erfindungsgemäß in einzeln ansteuerbare Lichtsegmente 20 unterteilt. Mit Verweis auf Figur 9 kann die Lichtquelle 2 dabei beispielsweise eine LED-Matrix umfassen, welche eine Vielzahl einzeln ansteuerbarer LEDs 21 aufweist, welche die einzeln ansteuerbaren Lichtsegmente 20 bilden. Dabei kann eine beliebige Anzahl an LEDs in einer beliebigen LED-Matrixanordnung vorgesehen sein. Die LEDs können dabei einzeln oder auch in Gruppen angesteuert werden. Bevorzugt sind die Gruppen an LEDs gleichartig ausgebildet, weisen also bevorzugt die gleichen LEDs auf.

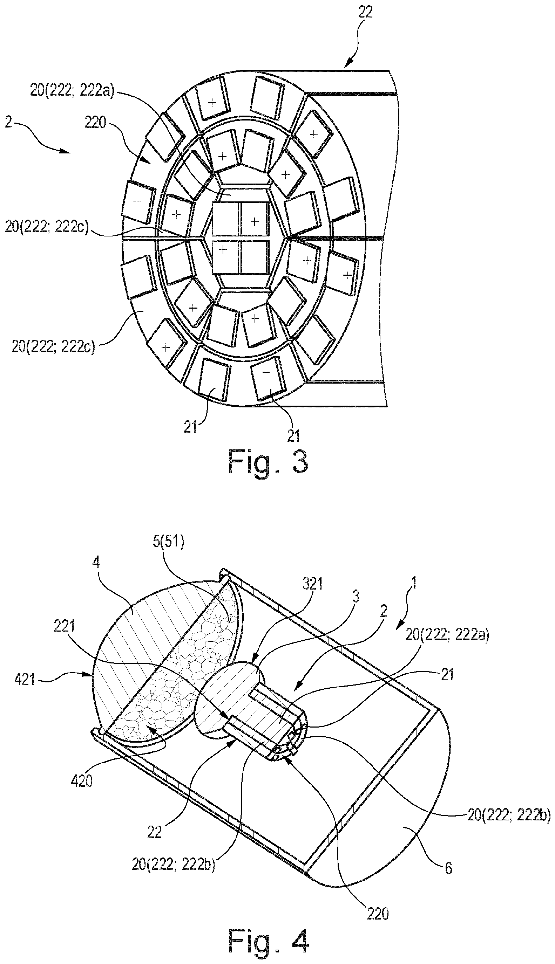

Mit Verweis auf die Ausführungsbeispiele der Figuren 1 und 4 ist es denkbar, dass die Lichtquelle 2 (ferner) einen länglichen Lichtmischstab 22 mit einer (dritten) Lichteinkoppelseite 220 und einer der (dritten) Lichteinkoppelseite 220 bezüglich seiner länglichen Erstreckung gegenüberliegenden (dritten) Lichtauskoppelseite 221 aufweist. Der Lichtmischstab 22 ist dabei in mehrere Segmente 222 unterteilt, welche die einzeln ansteuerbaren Lichtsegmente 20 bilden. Die Segmente 222 erstrecken sich dabei jeweils längs zwischen der Lichteinkoppelseite 220 und der Lichtauskoppelseite 221 des Lichtmischstabes 22.

Wie den Figuren 1 bis 5 zu entnehmen ist, können die Segmente 222 ein zentrales Stabelement 222a sowie das zentrale Stabelement 222a umfangsseitig umgebende Ringelemente 222b und/oder Ringsegmente 222c aufweisen. Auch andere Anordnungen der Segmente 222 sind denkbar.

Wie beispielsweise den Figuren 2 und 3 zu entnehmen ist, können die Segmente 222 des Lichtmischstabes 22 einen wenigstens teilweise eckigen Querschnitt aufweisen. So kann beispielsweise wenigstens das zentrale Stabelement 222a im Wesentlichen einen sechseckigen Querschnitt aufweisen. Auf diese Weise kann eine möglichst einfache Querschnittsform bei gleichzeitig einfacher Bereitstellung einer kompakten Struktur des Lichtmischstabes 22, wie insbesondere den Figuren 2 und 3 zu entnehmen ist, bereitgestellt werden. Denn um dieses sechseckige zentrale Stabelement 222a lassen sich die diesen umfangsseitig umgebenden Elemente 222b bzw. Segmente 222c kompakt anordnen.

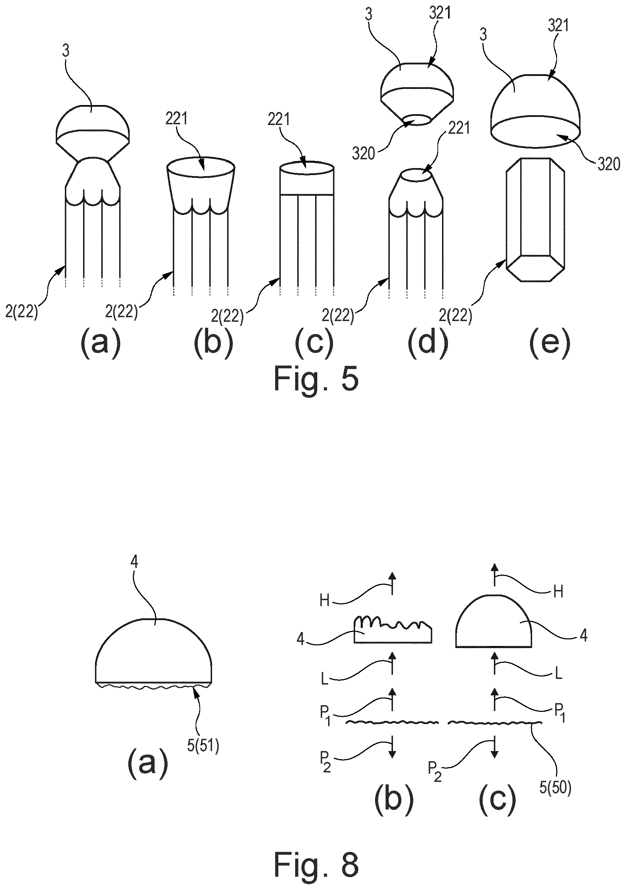

Gemäß einer bevorzugten Ausgestaltungsform kann der Lichtmischstab 22 zu der Voroptik 3 oder zu seiner dritten Lichtauskoppelseite 221 hin in eine definierte Querschnittsform übergehen bzw. zulaufen. Beispielsweise ist hier eine runde Querschnittsform denkbar. Entsprechende Ausgestaltungsformen sind hier beispielhaft der Figur 5 zu entnehmen. Gemäß diesen Ausführungsbeispielen geht der Lichtmischstab 22 dabei bevorzugt in die runde Querschnittsform über, wobei dies durch Zusammenlaufen (vgl. Figuren 5a und 5d), Aufweiten (vgl. Figur 5b) oder einen konstanten Querschnitt (vgl. Figur 5c) denkbar ist.

Wie insbesondere der Figur 3 zu entnehmen ist, ist den Segmenten 222 auf Seiten der Lichteinkoppelseite 220 des Lichtmischstabes 22 jeweils eine oder eine Gruppe einzeln ansteuerbarer LEDs 21 zugeordnet. Diese LEDs 21 können durch die vorbeschriebene LED-Matrix gebildet sein. Wie zuvor bereits beschrieben kann auch bei diesem Ausführungsbeispiel eine mögliche Gruppe an LEDs für alle Segmente 222 oder auch nur ein Teil von diesen gleichartig ausgebildet sein; wobei diese dann die gleichen LEDs aufweisen, um somit eine harmonische Lichtabgabe zu erzielen.

Um eine gute Lichtmischung in den einzelnen Segmenten 222 des Lichtmischstabes 22 zu erzielen, weist der Lichtmischstab 22 und folglich seine Segmente 222 bevorzugt eine Länge von wenigstens 30mm, vorzugsweise wenigstens 50mm, besonders bevorzugt wenigstens 80mm auf.

Die Voroptik 3 der erfindungsgemäßen Leuchte 1 weist eine erste Lichteinkoppelseite 320 zum Einkoppeln des Lichtes jeder der Lichtsegmente 20 der Lichtquelle 2 auf. Mit anderen Worten ist die Leuchte 1 derart bereitgestellt, dass wahlweise über jedes Lichtsegment 20, sofern es angesteuert wird, das Licht dieses Lichtsegments 20 in die Voroptik eingekoppelt wird. Hierzu weist die Lichtauskoppelseite 221 des Lichtmischstabes 22 bevorzugt auf die erste Lichteinkoppelseite 320 der Voroptik 3 und steht besonders bevorzugt mit dieser in (flächigem) Kontakt bzw. ist mit dieser integral ausgebildet. Mit Verweis auf die Figur 9 sind hierzu die jeweiligen LEDs bevorzugt in Abstrahlrichtung auf die Lichteinkoppelseite 320 der Voroptik 3 gerichtet. Die Lichtquelle - bevorzugt die LED-Matrix oder der Lichtmischstab 20 und insbesondere dessen dritte Lichtauskoppelseite 221 - steht bevorzugt in Kontakt mit der ersten Lichteinkoppelseite 320 der Voroptik 3. Besonders bevorzugt ist hier ein flächiger Kontakt denkbar, wie er in den Ausführungsbeispielen der Figuren 1, 4, 5 und 9 gezeigt ist.

Wie beispielsweise in Figur 4 oder Figur 5a dargestellt, kann wenigstens ein Teil der Segmente 222 - hier bevorzugt wenigstens das zentrale Stabelement 222a - integral mit der Voroptik 3 ausgebildet sein.

Neben der ersten Lichteinkoppelseite 320 weist die Voroptik 3 ferner eine erste Lichtauskoppelseite 321 zur definierten Lichtauskopplung auf. Insgesamt kann die Voroptik 3 eine sphärische Linse wie eine Halbkugellinse aufweisen bzw. als solche ausgebildet sein. Die erste Lichteinkoppelseite 320 kann dabei wenigstens teilweise flächig ausgebildet sein; bevorzugt wenigstens der der Lichtquelle 2 gegenüberliegende bzw. mit dieser in Kontakt stehende Bereich der Lichteinkoppelseite 320. Die erste Auskoppelseite 321 kann bevorzugt sphärisch und insbesondere halbkugelförmig ausgebildet sein, um eine entsprechend gewünschte Vorbündelung des Lichtes vor Eintritt in die der Voroptik 3 nachgelagerte Auskoppeloptik 4 zu ermöglichen.

Der Voroptik 3 ist die vorbezeichnete Auskoppeloptik 4 nachgelagert; insbesondere derart, dass das aus der Voroptik 3 ausgekoppelte Licht vollständig in die Auskoppeloptik 4 eingekoppelt werden kann. Die Auskoppeloptik 4 weist hierzu eine zweite Lichteinkoppelseite 420 zum Einkoppeln des aus der Voroptik 3 ausgekoppelten Lichts sowie eine zweite Lichtauskoppelseite 421 zur definierten Lichtabgabe der Leuchte 1, wie sie beispielhaft in der Figur 1 dargestellt ist.

Die Auskoppeloptik 4 ist dabei nicht auf eine spezielle Form beschränkt. Insbesondere hängt die Form von der gewünschten Abstrahlcharakteristik der Leuchte 1 ab. Beispielsweise kann die Auskoppeloptik 4 eine sphärische Linse, eine asphärische Linse oder auch eine Fresnel-Linse sein. Dabei ist insbesondere die zweite Lichtauskoppelseite 421 der Auskoppeloptik 4 entsprechend ausgebildet, wie beispielsweise in den Figuren 1, 4, 8 und 9 gezeigt.

In einer bevorzugten Ausgestaltungsform weist die Auskoppeloptik 4 eine flächige zweite Lichteinkoppelseite 420 auf, über die das Licht von der Voroptik 3 kommend bevorzugt vollständig und gezielt eingekoppelt werden kann.

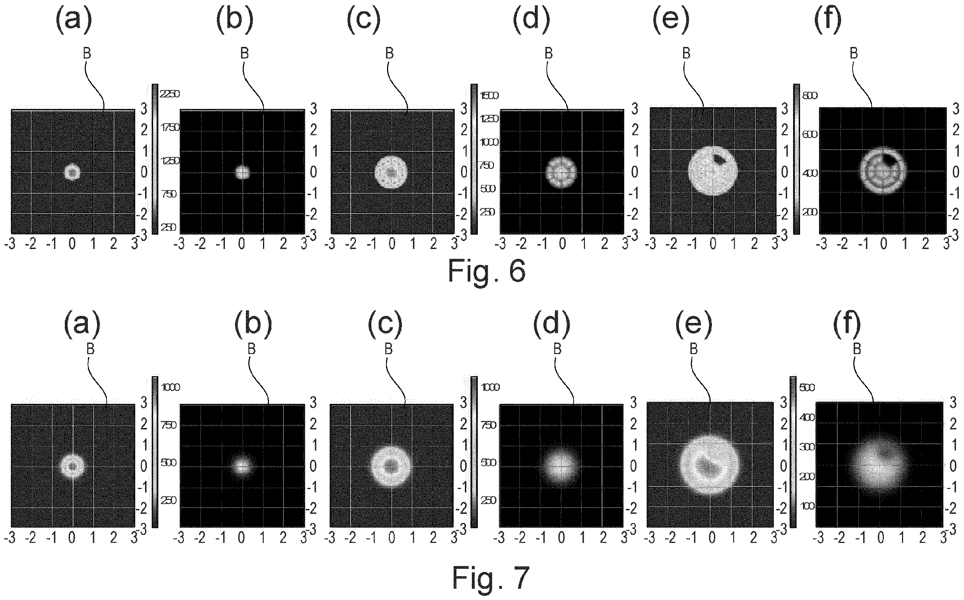

Die erfindungsgemäße Leuchte 1 kann ferner eine Streustruktur 5 aufweisen. Diese ist bevorzugt zwischen der Voroptik 3 und der Auskoppeloptik 4 angeordnet und dient einer (weiteren) Weichzeichnung der mittels der Leuchte erzielten Lichtabgabe bzw. der Abbildung einer den angesteuerten Lichtsegmenten 20 entsprechenden Lichtverteilung in einer der Auskoppeloptik 4 nachgelagerten Beleuchtungsebene B. Dies ist beispielsweise den Figuren 6 und 7 zu entnehmen. Während Figur 6 unterschiedliche Ansteuerungsvarianten der vorliegenden Erfindung darstellt (von links nach rechts werden zunehmend Ringstrukturen elektrisch hinzugeschaltet, so dass eine Art elektrischer Zoom-Effekt erzielt wird, wobei in den beiden rechten Darstellungen der Figur 6 ein einzelnes Lichtsegment 20 ausgespart ist, um eine asymmetrische Lichtverteilung zu erzielen). Figur 7 zeigt dieselben Abbildungen wie Figur 6 unter zusätzlicher Verwendung einer erfindungsgemäßen Streustruktur 5. Hier ist gut die zusätzliche Weichzeichnung der Abbildung in der Beleuchtungsebene B zu erkennen. Mittels der Streustruktur 5 wird folglich das von der Voroptik 3 ausgekoppelte Licht gestreut, bevor das so gestreute Licht bevorzugt über die zweite Lichteinkoppelseite 420 in die Auskoppeloptik 4 eingekoppelt wird.

Die Streustruktur 5 kann als separate Streuscheibe 50 zwischen der Voroptik 3 und der Auskoppeloptik 4 angeordnet sein, wie dies beispielhaft in den Figuren 8b und 9 gezeigt ist. Dabei kann die Streuscheibe, wie in der Figur 9 gezeigt, fix zu oder direkt auf der Auskoppeloptik 4 und insbesondere der zweiten Lichteinkoppelseite 420 vorgesehen sein.

Es ist jedoch auch denkbar, dass die Streuscheibe 50 in Lichtführungsrichtung L bzw. in Hauptabstrahlrichtung H der Leuchte 1 zwischen der Voroptik 3 und der Auskoppeloptik 4 beweglich P1, P2 und insbesondere relativ zur Auskoppeloptik 4 beweglich angeordnet ist. Hierzu kann beispielsweise eine hier nicht dargestellte Manipulationseinheit zum Bewegen der Streuscheibe 50 bereitgestellt sein. Diese kann beispielsweise mechanisch oder auch elektrisch angetrieben sein. Eine derart beweglich bereitgestellte Streuscheibe 50 ist beispielsweise der Figur 8b zu entnehmen. Darüber hinaus ist es auch denkbar, dass die Streustruktur 5 direkt in der Auskoppeloptik 4 und insbesondere auf der zweiten Lichteinkoppelseite 420 als Oberflächenstruktur 51 bereitgestellt ist, wie dies beispielhaft in der Ausführungsform gemäß der Figur 4 dargestellt ist. Auch eine beliebige Kombination von vorbeschriebenen und/oder anderen bekannten Streustrukturen 5 ist denkbar.

Insbesondere mit Verweis auf die Ausführungsbeispiele der Figuren 1 und 4 kann die erfindungsgemäße Leuchte 1 ferner ein Leuchtengehäuse 6 aufweisen, in dem die einzelnen Elemente der Leuchte 1, also insbesondere die Lichtquelle 2, die Voroptik 3 und die Auskoppeloptik 4 und wahlweise ferner die Streustruktur 5, angeordnet sind. Da durch wahlweise einzelne Ansteuerung der Lichtsegmente 20 die Abbildung der Lichtsegmente 20 auf einer Beleuchtungsebene B wahlweise variiert und gegebenenfalls sogar ein Zoom-Effekt erzielt werden kann, welche(r) rein elektrisch erzeugt wird, können die einzelnen Elemente der erfindungsgemäßen Leuchte 1 bevorzugt in einer fixen relativen Anordnung zueinander bereitgestellt sein, was den Aufbau der Leuchte 1 bei variabler Einstellmöglichkeit der Abstrahlcharakteristik erheblich vereinfacht; bspw. gegenüber einer Leuchte mit mechanisch einstellbarem Zoom. Lediglich in einer bevorzugten Ausgestaltungsform ist es denkbar, dass einzelne Elemente - insbesondere bevorzugt die Streustruktur 5 - zusätzlich beweglich P1, P2 vorgesehen sind.

Mit der erfindungsgemäßen Leuchte 1 ist es nunmehr möglich, ein Verfahren zur Steuerung der Abstrahlcharakteristik dieser Leuchte 1 durchzuführen. Nach der Bereitstellung der erfindungsgemäßen Leuchte 1 können sodann die einzeln ansteuerbaren Lichtsegmente 20 zur Abbildung einer den angesteuerten Lichtsegmenten 20 entsprechenden Lichtverteilung in einer der Auskoppeloptik 4 nachgelagerten Beleuchtungsebene B wahlweise angesteuert werden, um somit entsprechende unterschiedliche Abbildungen zu erzielen. Durch wahlweises Bewegen einer optional vorgesehenen separaten Streuscheibe 50 bevorzugt in Lichtführungsrichtung L zwischen der Voroptik 3 und der Auskoppeloptik 4 und insbesondere relativ zur Auskoppeloptik 4 kann beispielsweise zusätzlich die Schärfe der Lichtabbildung eingestellt werden. Hierzu wird sich bevorzugt einer entsprechend vorgesehenen Manipulationseinheit bedient.

Mit der vorliegenden Erfindung ist es somit möglich, einfach mittels elektrischer Ansteuerung einzeln ansteuerbarer Lichtsegmente 20 die Abbildung einer Leuchte 1 - mittels einer den angesteuerten Lichtsegmenten 20 entsprechenden Lichtverteilung - in einer der Leuchte 1 bzw. deren Auskoppeloptik 4 nachgelagerter Beleuchtungsebene B zu erzielen. Somit lässt sich auch, wie beispielsweise in den Figuren 6 und 7 gezeigt, ein rein elektrischer Zoom-Effekt erzielen. Durch den Einsatz einer Streustruktur 5 kann ferner die Abbildung der einzelnen Lichtsegmente weichgezeichnet werden, um somit eine insgesamt besonders harmonische Lichtabbildung zu erzielen. Bei Verwendung einer LED-Matrixanordnung mit feiner Auflösung und/oder bei Verwendung eines Lichtmischstabes 22 kann eine besonders homogene Lichtmischung ermöglicht und somit eine insgesamt homogene Lichtabgabe bzw. Lichtabbildung erzielt werden.

Die Erfindung ist nicht auf die vorhergehenden Ausführungsbeispiele beschränkt, sofern sie vom Gegenstand der folgenden Ansprüche umfasst ist. So ist insbesondere die Form der einzelnen Elemente nicht durch die vorliegende Erfindung beschränkt, sofern die Lichtquelle 2 das Licht einzeln ansteuerbare Lichtsegmente 20 entsprechend in eine Voroptik 3 einkoppeln und dieses aus dieser wiederum in eine der Voroptik 3 nachgelagerte Auskoppeloptik 4 einkoppeln kann, um somit eine definierte Lichtabgabe über die Auskoppeloptik 4 zu erzielen. Somit kann eine insgesamt rein elektrische Steuerung und Variation der Lichtabbildung der erfindungsgemäßen Leuchte 1 erzielt werden. Auch Querschnittsform des Lichtmischstabes 22 sowie seiner einzelnen Segmente 222 ist durch die Erfindung nicht beschränkt. Auch die Anzahl und Farbe der einzelnen LEDs 21 sowie die Anordnung der LEDs 21 bzw. Ausgestaltung der LED-Matrix ist durch die Erfindung nicht beschränkt. Ebenso die relative Anordnung der einzelnen Elemente (Lichtquelle 2, Voroptik 3, Auskoppeloptik 4, Streustruktur 5) zueinander ist durch die Erfindung nicht beschränkt, sofern sie bevorzugt eine entsprechende Lichtführung und Abbildung ermöglichen.

Es ist eine Leuchte 1 bereitgestellt, aufweisend: eine Lichtquelle 2, wobei die Lichtquelle 2 in einzeln ansteuerbare Lichtsegmente 20 unterteilt ist, eine Voroptik 3 mit einer ersten Lichteinkoppelseite 320 zum Einkoppeln des Lichtes jeder der Lichtsegmente 20 der Lichtquelle 2 sowie einer ersten Lichtauskoppelseite 321 zur definierten Lichtauskopplung, und eine der Voroptik 3 nachgelagerte Auskoppeloptik 4 mit einer zweiten Lichteinkoppelseite 420 zum Einkoppeln des aus der Voroptik 3 ausgekoppelten Lichts sowie einer zweiten Lichtauskoppelseite 421 zur definierten Lichtabgabe.

Die Lichtquelle 2 kann eine LED-Matrix umfassen, welche eine Vielzahl einzeln ansteuerbarer LEDs 21 aufweist, welche die einzeln ansteuerbaren Lichtsegmente 20 bilden.

Die Lichtquelle 2 kann einen länglichen Lichtmischstab 22 mit einer dritten Lichteinkoppelseite 220 und einer der dritten Lichteinkoppelseite 220 bezüglich seiner länglichen Erstreckung gegenüberliegenden dritten Lichtauskoppelseite 221 aufweisen, wobei der Lichtmischstab 22 in mehrere Segmente 222 unterteilt sein kann, welche die einzeln ansteuerbaren Lichtsegmente 20 bilden und sich jeweils zwischen der dritten Lichteinkoppelseite 220 und der dritten Lichtauskoppelseite 221 erstrecken.

Die Segmente 222 können ein zentrales Stabelement 222a sowie das zentrale Stabelement 222a umfangsseitig umgebende Ringelemente 222b und/oder Ringsegmente 222c aufweisen.

Wenigstens ein Teil der Segmente 222, vorzugsweise wenigstens das zentrale Stabelement 222a, kann integral mit der Voroptik 3 ausgebildet sein.

Die Segmente 222 des Lichtmischstabs 22 können einen wenigstens teilweise eckigen Querschnitt aufweisen, wobei vorzugsweise wenigstens das zentrale Stabelement 222a im Wesentlichen einen sechseckigen Querschnitt aufweisen kann.

Der Lichtmischstab 22 kann zu der Voroptik 3 oder zu seiner dritten Lichtauskoppelseite 321 hin in eine definierte Querschnittsform, vorzugsweise eine runde Querschnittsform, übergehen und insbesondere zulaufen.

Die Segmente 222 auf Seiten der dritten Lichteinkoppelseite 220 des Lichtmischstabes 22 können jeweils eine oder eine Gruppe einzeln ansteuerbarer LEDs 21 zugeordnet sein, welche bevorzugt in Form der LED-Matrix bereitgestellt sind, wobei bevorzugt die Gruppen an LEDs 21 gleichartig ausgebildet sein können.

Der Lichtmischstab 22 kann eine Länge von wenigstens 30mm, vorzugsweise wenigstens 50mm, besonders bevorzugt wenigstens 80mm aufweisen.

Die Lichtquelle 2, bevorzugt die LED-Matrix oder der Lichtmischstab 22 und insbesondere dessen dritte Lichtauskoppelseite 221, kann in Kontakt, vorzugsweise in flächigem Kontakt, mit der ersten Lichteinkoppelseite 320 der Voroptik 3 stehen.

Die Voroptik 3 kann eine sphärische Linse wie eine Halbkugellinse aufweisen, wobei bevorzugt die erste Lichteinkoppelseite 320 wenigstens teilweise flächig und die erste Lichtauskoppelseite 321 sphärisch, insbesondere halbkugelförmig, ausgebildet sein kann.

Die Auskoppeloptik 4 kann eine sphärische Linse, eine asphärische Linse oder eine Fresnellinse sein.

Die Auskoppeloptik 4 kann eine flächige zweite Lichteinkoppelseite 420 aufweisen.

Die Leuchte 1 kann ferner eine Streustruktur 5 aufweisen, welche bevorzugt zwischen der Voroptik 3 und der Auskoppeloptik 4 derart angeordnet ist, um das von der Voroptik 3 ausgekoppelte Licht zu streuen, bevor das so gestreute Licht bevorzugt über die zweite Lichteinkoppelseite 420 in die Auskoppeloptik 4 eingekoppelt werden kann.

Die Streustruktur 5 kann als separate Streuscheibe 50 zwischen der Voroptik 3 und der Auskoppeloptik 4 angeordnet sein.

Die Streuscheibe 50 kann relativ fix zu oder direkt auf der Auskoppeloptik 4, insbesondere der zweiten Lichteinkoppelseite 420, vorgesehen sein.

Die Streuscheibe 50 kann bevorzugt in Lichtführungsrichtung L bzw. in Hauptabstrahlrichtung H der Leuchte 1 zwischen der Voroptik 3 und der Auskoppeloptik 4 beweglich, insbesondere relativ zur Auskoppeloptik 4 beweglich, angeordnet sein, und vorzugsweise ferner eine Manipulationseinheit zum Bewegen der Streuscheibe 50 aufweisen.

Die Streustruktur 5 kann direkt in der Auskoppeloptik 4, insbesondere auf der zweiten Lichteinkoppelseite 420, als Oberflächenstruktur 51 bereitgestellt sein.

Es ist ferner ein Verfahren zur Steuerung der Abstrahlcharakteristik einer Leuchte 1 bereitgestellt, aufweisend die Schritte: Bereitstellen der zuvor beschriebenen Leuchte 1, und wahlweises Ansteuern der einzeln ansteuerbaren Lichtsegmente 20 zur Abbildung einer den angesteuerten Lichtsegmenten 20 entsprechenden Lichtverteilung in einer der Auskoppeloptik 4 nachgelagerten Beleuchtungsebene B.

Das Verfahren kann ferner den Schritt des wahlweisen Bewegens der separaten Streuscheibe 50 bevorzugt in Lichtführungsrichtung L bzw. in Hauptabstrahlrichtung H zwischen der Voroptik 3 und der Auskoppeloptik 4, insbesondere relativ zur Auskoppeloptik 4, vorzugsweise mittels der Manipulationseinheit, zur Einstellung der Schärfe der Abbildung der Lichtverteilung auf der Beleuchtungsebene B aufweisen.

## Patentansprüche

1. Leuchte (1) aufweisend:
eine Lichtquelle (2), wobei die Lichtquelle (2) in einzeln ansteuerbare Lichtsegmente (20) unterteilt ist,
eine Voroptik (3) mit einer ersten Lichteinkoppelseite (320) zum Einkoppeln des Lichtes jeder der Lichtsegmente (20) der Lichtquelle (2) sowie einer ersten Lichtauskoppelseite (321) zur definierten Lichtauskopplung, und
eine der Voroptik (3) nachgelagerte Auskoppeloptik (4) mit einer zweiten Lichteinkoppelseite (420) zum Einkoppeln des aus der Voroptik (3) ausgekoppelten Lichts sowie einer zweiten Lichtauskoppelseite (421) zur definierten Lichtabgabe,
**dadurch gekennzeichnet,**
**dass** die Leuchte (1) derart ausgebildet ist, dass eine den angesteuerten Lichtsegmenten (20) entsprechende Lichtverteilung in einer der Auskoppeloptik (4) nachgelagerten Beleuchtungsebene (B) abgebildet wird,
**dass** die Lichtquelle (2) einen länglichen Lichtmischstab (22) mit einer dritten Lichteinkoppelseite (220) und einer der dritten Lichteinkoppelseite (220) bezüglich seiner länglichen Erstreckung gegenüberliegenden dritten Lichtauskoppelseite (221) aufweist, wobei der Lichtmischstab (22) in mehrere Segmente (222) unterteilt ist, welche die einzeln ansteuerbaren Lichtsegmente (20) bilden und sich jeweils zwischen der dritten Lichteinkoppelseite (320) und der dritten Lichtauskoppelseite (321) erstrecken, und
**dass** die Segmente (222) ein zentrales Stabelement (222a) sowie das zentrale Stabelement (222a) umfangsseitig umgebende Ringelemente (222b) und/oder Ringsegmente (222c) aufweist.

2. Leuchte (1) nach Anspruch 1, wobei die Lichtquelle (2) eine LED-Matrix umfasst, welche eine Vielzahl einzeln ansteuerbarer LEDs (21) aufweist, welche die einzeln ansteuerbaren Lichtsegmente (20) bilden.

3. Leuchte (1) nach Anspruch 1 oder 2, wobei wenigstens ein Teil der Segmente (222), vorzugsweise wenigstens das zentrale Stabelement (222a), integral mit der Voroptik (3) ausgebildet ist.

4. Leuchte (1) nach einem der Ansprüche 1 bis 3, wobei die Segmente (222) des Lichtmischstabs (22) einen wenigstens teilweise eckigen Querschnitt aufweisen, wobei vorzugsweise wenigstens das zentrale Stabelement (222a) im Wesentlichen einen sechseckigen Querschnitt aufweist.

5. Leuchte (1) nach einem der Ansprüche 1 bis 4,
wobei der Lichtmischstab (22) zu der Voroptik (3) oder zu seiner dritten Lichtauskoppelseite (321) hin in eine definierte Querschnittsform, vorzugsweise eine runde Querschnittsform, übergeht und insbesondere zuläuft, und/oder
wobei der Lichtmischstab (22) eine Länge von wenigstens 30mm, vorzugweise wenigstens 50mm, besonders bevorzugt wenigstens 80mm aufweist.

6. Leuchte (1) nach einem der Ansprüche 1 bis 5, wobei den Segmenten (222) auf Seiten der dritten Lichteinkoppelseite (220) des Lichtmischstabes (22) jeweils eine oder eine Gruppe einzeln ansteuerbarer LEDs (21) zugeordnet ist, welche bevorzugt in Form der LED-Matrix bereitgestellt sind, wobei bevorzugt die Gruppen an LEDs (21) gleichartig ausgebildet sind.

7. Leuchte (1) nach einem der vorhergehenden Ansprüche, wobei die Lichtquelle (2), bevorzugt die LED-Matrix oder der Lichtmischstab (22) und insbesondere dessen dritte Lichtauskoppelseite (221), in Kontakt, vorzugsweise in flächigem Kontakt, mit der ersten Lichteinkoppelseite (320) der Voroptik (3) steht.

8. Leuchte (1) nach einem der vorhergehenden Ansprüche, wobei die Voroptik (3) eine sphärische Linse wie eine Halbkugellinse aufweist, wobei bevorzugt die erste Lichteinkoppelseite (320) wenigstens teilweise flächig und die erste Lichtauskoppelseite (321) sphärisch, insbesondere halbkugelförmig, ausgebildet ist.

9. Leuchte (1) nach einem der vorhergehenden Ansprüche, wobei die Auskoppeloptik (4) eine sphärische Linse, eine asphärische Linse oder eine Fresnellinse ist.

10. Leuchte (1) nach einem der vorhergehenden Ansprüche, wobei die Auskoppeloptik (4) eine flächige zweite Lichteinkoppelseite (420) aufweist.

11. Leuchte (1) nach einem der vorhergehenden Ansprüche, ferner aufweisend eine Streustruktur (5), welche bevorzugt zwischen der Voroptik (3) und der Auskoppeloptik (4) derart angeordnet ist, um das von der Voroptik (3) ausgekoppelte Licht zu streuen, bevor das so gestreute Licht bevorzugt über die zweite Lichteinkoppelseite (420) in die Auskoppeloptik (4) eingekoppelt wird,
wobei vorzugsweise die Streustruktur (5) als separate Streuscheibe (50) zwischen der Voroptik (3) und der Auskoppeloptik (4) angeordnet ist,
wobei ferner vorzugsweise die Streuscheibe (50) relativ fix zu oder direkt auf der Auskoppeloptik (4), insbesondere der zweiten Lichteinkoppelseite (420), vorgesehen ist, und/oder wobei ferner vorzugsweise die Streuscheibe (50) bevorzugt in Lichtführungsrichtung (L) bzw. in Hauptabstrahlrichtung (H) der Leuchte (1) zwischen der Voroptik (3) und der Auskoppeloptik (4) beweglich, insbesondere relativ zur Auskoppeloptik (4) beweglich, angeordnet ist, wobei die Leuchte (1) besonders bevorzugt eine Manipulationseinheit zum Bewegen der Streuscheibe (50) aufweist, und/oder
wobei vorzugsweise die Streustruktur (5) direkt in der Auskoppeloptik (4), insbesondere auf der zweiten Lichteinkoppelseite (420), als Oberflächenstruktur (51) bereitgestellt ist.

12. Verfahren zur Steuerung der Abstrahlcharakteristik einer Leuchte (1), aufweisend die Schritte:
• Bereitstellen einer Leuchte (1) gemäß einem der vorhergehenden Ansprüche,
• Wahlweises Ansteuern der einzeln ansteuerbaren Lichtsegmente (20) zur Abbildung einer den angesteuerten Lichtsegmenten (20) entsprechenden Lichtverteilung in einer der Auskoppeloptik (4) nachgelagerten Beleuchtungsebene (B).

13. Verfahren nach Anspruch 12, ferner aufweisend den Schritt des wahlweisen Bewegens der separaten Streuscheibe (50) der Leuchte (1) gemäß Anspruch 11 bevorzugt in Lichtführungsrichtung (L) bzw. in Hauptabstrahlrichtung (H) zwischen der Voroptik (3) und der Auskoppeloptik (4), insbesondere relativ zur Auskoppeloptik (4), vorzugsweise mittels der Manipulationseinheit, zur Einstellung der Schärfe der Abbildung der Lichtverteilung auf der Beleuchtungsebene (B).

## Claims

1. Luminaire (1), comprising:
a light source (2), the light source (2) being divided into individually controllable light segments (20),
a preliminary optical component (3) having a first light coupling-in side (320) for coupling in the light of each of the light segments (20) of the light source (2) and a first light coupling-out side (321) for defined light outcoupling, and
a coupling-out optical component (4) downstream of the preliminary optical component (3) and having a second light coupling-in side (420) for coupling in the light coupled out of the preliminary optical component (3) and a second light coupling-out side (421) for defined light outcoupling,
**characterized in that**
the luminaire (1) is designed such that a light distribution corresponding to the controlled light segments (20) is imaged in an illumination plane (B) downstream of the coupling-out optical component (4),
**in that** the light source (2) has an elongate light mixing rod (22) having a third light coupling-in side (220) and a third light coupling-out side (221) opposite the third light coupling-in side (220) with respect to its elongate extension, the light mixing rod (22) being divided into a plurality of segments (222) which form the individually controllable light segments (20) and each extend between the third light coupling-in side (320) and the third light coupling-out side (321), and
**in that** the segments (222) have a central rod element (222a), and ring elements (222b) and/or ring segments (222c) peripherally surrounding the central rod element (222a).

2. Luminaire (1) according to claim 1, wherein the light source (2) comprises an LED matrix which has a plurality of individually controllable LEDs (21) which form the individually controllable light segments (20).

3. Luminaire (1) according to claim 1 or claim 2, wherein at least some of the segments (222), preferably at least the central rod element (222a), are integrally formed with the preliminary optical component (3).

4. Luminaire (1) according to any of claims 1 to 3, wherein the segments (222) of the light mixing rod (22) have an at least partially angular cross section, wherein preferably at least the central rod element (222a) substantially has a hexagonal cross section.

5. Luminaire (1) according to any of claims 1 to 4,
wherein the light mixing rod (22) transitions and in particular converges, towards the preliminary optical component (3) or towards the third light coupling-out side (321) thereof, into a defined cross-sectional shape, preferably a round cross-sectional shape, and/or
wherein the light mixing rod (22) has a length of at least 30 mm, preferably at least 50 mm, particularly preferably at least 80 mm.

6. Luminaire (1) according to any of claims 1 to 5, wherein one or a group of individually controllable LEDs (21), which are preferably provided in the form of the LED matrix, is associated with each of the segments (222) on the side of the third light coupling-in side (220) of the light mixing rod (22), wherein the groups of LEDs (21) are preferably of the same design.

7. Luminaire (1) according to any of the preceding claims, wherein the light source (2), preferably the LED matrix or the light mixing rod (22) and in particular the third light coupling-out side (221) thereof, is in contact, preferably in planar contact, with the first light coupling-in side (320) of the preliminary optical component (3).

8. Luminaire (1) according to any of the preceding claims, wherein the preliminary optical component (3) has a spherical lens such as a hemispherical lens, wherein preferably the first light coupling-in side (320) is designed to be at least partially planar and the first light coupling-out side (321) is designed to be spherical, in particular hemispherical.

9. Luminaire (1) according to any of the preceding claims, wherein the coupling-out optical component (4) is a spherical lens, an aspherical lens, or a Fresnel lens.

10. Luminaire (1) according to any of the preceding claims, wherein the coupling-out optical component (4) has a planar second light coupling-in side (420).

11. Luminaire (1) according to any of the preceding claims, further comprising a diffusing structure (5) which is preferably arranged between the preliminary optical component (3) and the coupling-out optical component (4) so as to disperse the light coupled out by the preliminary optical component (3), before the light dispersed in this way is preferably coupled into the coupling-out optical component (4) via the second light coupling-in side (420),
wherein the diffusing structure (5) is preferably arranged as a separate diffusing screen (50) between the preliminary optical component (3) and the coupling-out optical component (4),
wherein the diffusing screen (50) is preferably also provided relatively fixed to or directly on the coupling-out optical component (4), in particular the second light coupling-in side (420), and/or
wherein the diffusing screen (50) is preferably also arranged so as to be movable in the light guide direction (L) or in the main emission direction (H) of the luminaire (1) between the preliminary optical component (3) and the coupling-out optical component (4), in particular movable relative to the coupling-out optical component (4), wherein the luminaire (1) particularly preferably has a manipulation unit for moving the diffusing screen (50), and/or
wherein the diffusing screen (5) is preferably provided directly in the coupling-out optical component (4), in particular on the second light coupling-in side (420), as a surface structure (51).

12. Method for controlling the emission characteristic of a luminaire (1), comprising the steps of:
• providing a luminaire (1) according to any of the preceding claims,
• selectively controlling the individually controllable light segments (20) in order to image a light distribution corresponding to the controlled light segments (20) in an illumination plane (B) downstream of the coupling-out optical component (4).

13. The method according to claim 12, further comprising the step of selectively moving the separate diffusing screen (50) of the luminaire (1) according to claim 11 preferably in the light guide direction (L) or in the main emission direction (H) between the preliminary optical component (3) and the coupling-out optical component (4), in particular relative to the coupling-out optical component (4), preferably by means of the manipulation unit, in order to adjust the sharpness of the image of the light distribution on the illumination plane (B).

## Revendications

1. Luminaire (1), présentant :
une source de lumière (2), dans lequel la source de lumière (2) est divisée en segments lumineux (20) pouvant être commandés individuellement,
une pré-optique (3) comportant un premier côté d'injection de lumière (320) pour l'injection de la lumière de chacun des segments lumineux (20) de la source de lumière (2), ainsi qu'un premier côté de sortie de lumière (321) pour la sortie définie de lumière, et
une optique de sortie (4) en aval de la pré-optique (3) et comportant un deuxième côté d'injection de lumière (420) pour l'injection de la lumière éjectée de la pré-optique (3), ainsi qu'un deuxième côté de sortie de lumière (421) pour l'émission définie de lumière,
**caractérisé en ce que**
le luminaire (1) est conçu de telle sorte qu'une répartition de lumière correspondant aux segments lumineux (20) commandés est projetée dans un plan d'éclairage (B) en aval de l'optique de sortie (4), **en ce que** la source de lumière (2) présente une barre mélangeuse de lumière (22) allongée comportant un troisième côté d'injection de lumière (220) et un troisième côté de sortie de lumière (221) opposé au troisième côté d'injection de lumière (220) relativement à son extension allongée, dans lequel la barre mélangeuse de lumière (22) est divisée en plusieurs segments (222) qui forment les segments lumineux (20) commandés individuellement et s'étendent respectivement entre le troisième côté d'injection de lumière (320) et le troisième côté de sortie de lumière (321), et
**en ce que** les segments (222) présentent un élément de barre (222a) central, et l'élément de barre (222a) central présente, sur sa périphérie, des éléments annulaires (222b) et/ou des segments annulaires (222c) environnants.

2. Luminaire (1) selon la revendication 1, dans lequel la source de lumière (2) comprend une matrice LED qui présente une pluralité de LED (21) pouvant être commandées individuellement, lesquelles LED forment les segments lumineux (20) pouvant être commandés individuellement.

3. Luminaire (1) selon la revendication 1 ou 2, dans lequel au moins une partie des segments (222), de préférence au moins l'élément de barre (222a) central, est conçue d'un seul tenant avec la pré-optique (3).

4. Luminaire (1) selon l'une des revendications 1 à 3, dans lequel les segments (222) de la barre mélangeuse de lumière (22) présentent une section au moins partiellement angulaire, dans lequel de préférence au moins l'élément de barre (222a) central présente sensiblement une section hexagonale.

5. Luminaire (1) selon l'une des revendications 1 à 4,
dans lequel la barre mélangeuse de lumière (22) se transforme en, et en particulier converge vers, une forme de section transversale définie, de préférence une forme de section transversale ronde, en direction de la pré-optique (3) ou de son troisième côté de sortie de lumière (321), et/ou
dans lequel la barre mélangeuse de lumière (22) présente une longueur d'au moins 30 mm, de préférence d'au moins 50 mm, plus préférablement d'au moins 80 mm.

6. Luminaire (1) selon l'une des revendications 1 à 5, dans lequel respectivement une LED ou un groupe de LED (21) pouvant être commandées individuellement est associé(e) aux segments (222) sur des côtés du troisième côté d'injection de lumière (220) de la barre mélangeuse de lumière (22), lesquelles LED sont de préférence fournies sous la forme de la matrice LED, dans lequel les groupes de LED (21) sont de préférence conçus de façon identique.

7. Luminaire (1) selon l'une des revendications précédentes, dans lequel la source de lumière (2), de préférence la matrice LED ou la barre mélangeuse de lumière (22) et en particulier son troisième côté de sortie de lumière (221) est en contact, de préférence en contact plat, avec le troisième côté d'injection de lumière (320) de la pré-optique (3).

8. Luminaire (1) selon l'une des revendications précédentes, dans lequel la pré-optique (3) présente une lentille sphérique comme une lentille hémisphérique, dans lequel de préférence le premier côté d'injection de lumière (320) est conçu au moins partiellement plat et le premier côté de sortie de lumière (321) est sphérique, en particulier hémisphérique.

9. Luminaire (1) selon l'une des revendications précédentes, dans lequel l'optique de sortie (4) est une lentille sphérique, une lentille asphérique ou une lentille de Fresnel.

10. Luminaire (1) selon l'une des revendications précédentes, dans lequel l'optique de sortie (4) présente un deuxième côté d'injection (420) plat.

11. Luminaire (1) selon l'une des revendications précédentes, présentant en outre une structure de diffusion (5) qui est de préférence disposée entre la pré-optique (3) et l'optique de sortie (4) de façon à diffuser la lumière éjectée par la pré-optique (3) avant que la lumière ainsi diffusée ne soit injectée dans l'optique de sortie (4) par l'intermédiaire du deuxième côté d'injection de lumière (420),
dans lequel de préférence la structure de diffusion (5) est de disposé comme diffuseur (50) séparé entre la pré-optique (3) et l'optique de sortie (4),
dans lequel en outre de préférence le diffuseur (50) est prévu relativement fixe par rapport à l'optique de sortie (4) ou directement sur celui-ci, en particulier relativement fixe par rapport au deuxième côté d'injection de lumière (420) ou sur celui-ci, et/ou
dans lequel en outre de préférence le diffuseur (50) est disposé de préférence dans la direction de guidage de lumière (L) ou dans la direction de rayonnement principale (H) du luminaire (1), entre la pré-optique (3) et l'optique de sortie (4), en particulier mobile par rapport à l'optique de sortie (4), dans lequel le luminaire (1) présente plus préférablement une unité de manipulation pour le déplacement du diffuseur (50), et/ou
dans lequel de préférence la structure de diffusion (5) est fournie, structure de surface (51), directement dans l'optique de sortie (4), en particulier sur le deuxième côté d'injection de lumière (420).

12. Procédé pour le commande d'une caractéristique de rayonnement d'un luminaire (1), présentant les étapes de :
• fourniture d'un luminaire (1) selon l'une des revendications précédentes,
• commande sélective des segments lumineux (20) pouvant être commandés individuellement pour la représentation, dans un plan d'éclairage (B) en aval de l'optique de sortie (4), d'une répartition de lumière correspondant aux segments lumineux (20) commandés.

13. Procédé selon la revendication 12, présentant en outre l'étape de déplacement sélectif du diffuseur (50) séparé du luminaire (1) selon la revendication 11, de préférence dans la direction de guidage de lumière (L) ou dans la direction de rayonnement principale (H) entre la pré-optique (3) et l'optique de sortie (4), en particulier par rapport à l'optique de sortie (4), de préférence à l'aide de l'unité de manipulation, pour le réglage de la netteté de la représentation de la répartition de lumière sur le plan d'éclairage (B).
